# EUROPEAN PATENT APPLICATION

(11) **EP 2 267 375 A1**
(43) Date of publication of application: **29.12.2010**
(21) Application number: 09715163.3
(22) Date of filing: 25.02.2009
(51) Int. Cl.: F24F 13/28

(54) **AIR CONDITIONING APPARATUS**

(30) Priority: 28.02.2008 JP 2008048738; 09.09.2008 JP 2008231532
(71) Applicant: Daikin Industries, Ltd., Osaka 530-8323 (JP)
(72) Inventor: UEYAMA, Masaharu, Kusatsu-shi Shiga 525-8526 (JP); NAGAOKA, Shinji, Kusatsu-shi Shiga 525-8526 (JP); NATSUME, Toshiyuki, Kusatsu-shi Shiga 525-8526 (JP)
(74) Representative: HOFFMANN EITLE
(86) International application number: PCT/JP2009/000834
(87) International publication number: WO 2009/107377

(57) **Abstract**

The present invention addresses a need for producing an air conditioner having a function of automatically cleaning an air filter for reducing time and effort of disposing dust. The air conditioner is configured to remove dust from the air filter and contain the removed dust within a dust box. The air conditioner is further configured to smoothly compress the contained dust without allowing the contained dust from leaking out of the dust box for increasing a volume of the dust containable in a dust box. Specifically, the air conditioner includes a dust box (71) configured to contain dust removed from an air filter (21). The dust box (71) includes a dust intake (80), and a dust containing section (81) configured to contain dust put therein through the dust intake (80). Further, the dust box (71) includes a compression rod (86) rotatably supported in or in the vicinity of the dust intake (80). The dust box (71) is configured to rotationally drive the compression rod (86) for containing dust within the dust containing section (81) in a compressed state.

## Description

### TECHNICAL FIELD

The present invention relates to an air conditioner with an automatic filter cleaning function, which includes a dust box for containing dust removed from an air filter.

### BACKGROUND ART

The air conditioners are configured to inhale indoor air using a ventilation fan, allow the inhaled air to flow through a heat exchanger, and blow the air heated or cooled by the heat exchanger to the indoor. The air conditioners include an air filter disposed in front of the heat exchanger for preventing the heat exchanger from being polluted by dust floating in the air. When the air filter clogs with the dust attached thereto, ventilation resistance is increased. This results in reduction in air conditioning performance of the air conditioners and increase in power consumption of the same. In response, air conditioners of various types with an automatic filter cleaning function have been proposed to solve the drawbacks.

The air conditioners with this kind of automatic filter cleaning function are configured to remove dust from the air filter by means of a cleaning brush and store the removed dust in a dust box. The dust box is regularly detached for disposing the dust stored therein.

For example, Patent Document 1 (Japan Laid-open Patent Application Publication No. JP-A-2004-347246) discloses a type of the air conditioners with the aforementioned function. The air conditioner includes a mechanism for pressing dust into a dust box. The mechanism increases the volume of dust containable in the dust box for reducing frequency of disposing dust out of the dust box and for saving time and effort of the same.

### DISCLOSURE OF THE INVENTION

### <Technical Problem>

In the mechanism described in Patent Document 1, however, the dust box used herein has a large capacity because the dust box is structured to house a cleaning brush therein. Further, a dust pressing mechanism is configured to reciprocate a press member in the interior of the dust box. In other words, the dust box adopts a mechanism configured to pivot the press member back and forth in the interior of the large capacity dust box. It is difficult to conclude that the press member produces a sufficient pressing force due to the configuration.

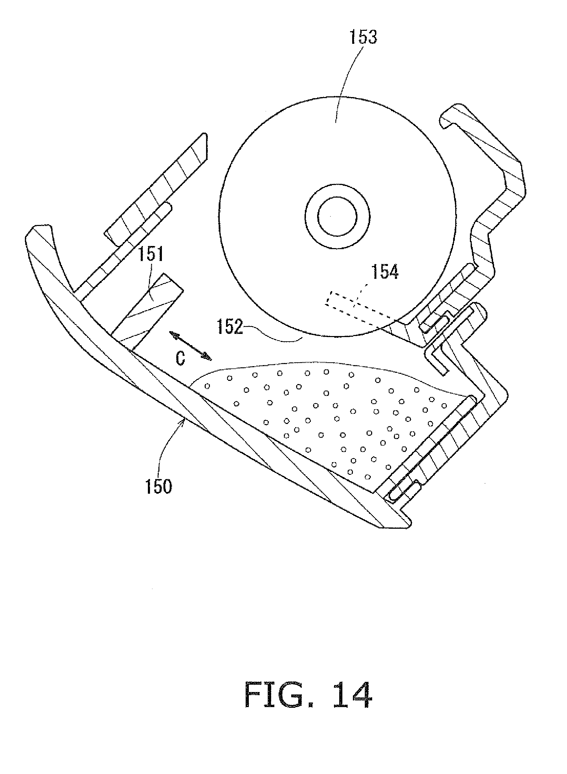

In response to this, it is plausible to produce an air conditioner for achieving enhanced pressing force. FIG.14 illustrates an exemplary air conditioner of the type. In the air conditioner, a dust box 150 houses a strip compression plate 151. The strip compression plate 151 is configured to compress dust within the dust box 150. In this case, a large volume of dust can be stored in the dust box 150 while being compressed. Accordingly, frequency of disposing dust can be further reduced than that in the well-know air conditioners. It should be noted in FIG. 14 that reference numerals 152, 153, 154 are respectively given to a dust intake, a cleaning brush, and a brush cleaning member configured to scrape away dust attaching to the cleaner brush 153. According to the structure, the strip compression plate 151 is configured to be reciprocated for compressing dust within the dust box 150 in a direction of Arrow C depicted in FIG. 14. Therefore, chances are high that dust scatters within the dust box 150 in response to large motion of the compression plate 151. This may cause a trouble that dust leaks through the dust intake 152.

The present invention is produced for solving the aforementioned drawbacks of the well-known air conditioners. The present invention addresses a need for providing an air conditioner with an automatic air-filter cleaning function for saving time and effort of disposing dust. The air conditioner is herein configured to smoothly compress dust, removed from an air filter and contained in a dust box, while preventing the dust from leaking out of the dust box for increasing the volume of dust containable in the dust box.

### <Solution to Problem>

To solve the aforementioned problems, an air conditioner according to a first aspect of the present invention is an air conditioner with an automatic filter cleaning function of removing dust from an air filter 21. The air conditioner includes a dust box 71, 101 and a dust transportation section 86, 116. The dust box 71, 101 includes a dust intake 80, 110, and a dust containing section 81, 111 configured to contain dust put therein through the dust intake 80, 110. The dust transportation section 86, 116 is disposed in or in the vicinity of the dust intake 80, 110. The dust transportation section 86, 116 is rotatably supported by the dust box 71, 101. Further, the dust box 71, 101 is configured to rotationally drive the dust transportation section 86, 116 for containing dust within the dust containing section 81, 111 in a compressed state.

An air conditioner according to a second aspect of the present invention is characterized as follows. The dust box 71, 101 includes a guide wall 82, 112 and an anti-reverse wall 83, 113. The dust intake 80, 110 is segmented and formed between a distal end of the guide wall 82, 112 and a distal end of the anti-reverse wall 83, 113. The dust transportation section 86, 116 is disposed between the guide wall 82, 112 and the anti-reverse wall 83, 113. Further, the dust transportation section 86, 116 is configured to transport dust into the dust containing section 81, 111 through a clearance produced between the dust transportation section 86, 116 and the guide wall 82, 112.

An air conditioner according to a third aspect of the present invention is characterized in that dust is press-contacted with the anti-reverse wall 82, 113 after the dust is transported into the dust containing section 81, 111.

An air conditioner according to a fourth aspect of the present invention is characterized in that an interval between the dust transportation section 86, 116 and the distal end of the guide wall 82, 112 is set to be greater than an interval between the dust transportation section 86, 116 and the distal end of the anti-reverse wall 83, 113.

An air conditioner according to a fifth aspect of the present invention is characterized in that the anti-reverse wall 83, 113 is disposed higher than or at the same height as the dust transportation section 86, 116.

An air conditioner according to a sixth aspect of the present invention is characterized as follows. The air conditioner includes a rotary brush 72, 102 configured to remove dust from the air filter 21. Further, the dust transportation section 86, 116 is composed of a compression rod 86, 116 disposed below the rotary brush 72, 102. Simultaneously, the compression rod 86. 116 is configured to rotate about an axis arranged roughly parallel to the rotary brush 72, 102.

An air conditioner according to a seventh aspect of the present invention is characterized as follows. The compression rod 86 is configured to rotate in a rotational direction identical to a rotational direction of the rotary brush 72. Further, the guide wall 82 is disposed on an upstream side in the rotational direction of the rotary brush 72. Yet further, the anti-reverse wall 83 is disposed on a downstream side of the guide wall 82 in the rotational direction of the rotary brush 72.

An air conditioner according to an eighth aspect of the present invention is characterized as follows. The compression rod 116 is configured to rotate in a direction opposite to the rotational direction of the rotary brush 102. The guide wall 112 is disposed on a downstream side in the rotational direction of the rotary brush 102. Further, the anti-reverse wall 113 is disposed on an upstream side of the guide wall 112 in the rotational direction of the rotary brush 102.

An air conditioner according to a ninth aspect of the present invention is characterized as follows. The air conditioner includes a brush cleaning member 85, 115 configured to remove dust attaching to the rotary brush 72, 102 from the rotary brush 72, 102. Further, the brush cleaning member 85, 115 is disposed between the rotary brush 72, 102 and the compression rod 86, 116.

An air conditioner according to a tenth aspect of the present invention is characterized in that the guide wall 112 is formed in the vicinity of a base end portion of the brush cleaning member 115.

An air conditioner according to an eleventh aspect of the present invention is characterized as follows. The air filter 21 is disposed in a movable state. The rotary brush 72, 102 is disposed under a condition that the axis of the rotary brush 72, 102 intersects with a moving direction of the air filter 21. The rotary brush 72, 102 is configured to make contact with and slide along a surface of the air filter 21 during movement of the air filter 21 for removing dust from the air filter 21. Further, the compression rod 86, 116 is disposed roughly parallel to the rotary brush 72, 102.

An air conditioner according to a twelfth aspect of the present invention is characterized as follows. The dust transportation section 86, 116 is disposed in or in the vicinity of the dust intake 80, 110. The dust transportation section 86, 116 includes a pair of compression rods configured to rotate opposite to each other. Further, the dust box 71, 101 is configured to rotationally drive the compression rods for putting dust into the dust containing section 81, 111 through a clearance produced between the compression rods and contain the dust within the dust containing section 81, 111 in a compressed state.

An air conditioner according to a thirteenth aspect of the present invention is characterized as follows. The air conditioner includes a rotary brush 72, 102 and a brush cleaning member 85, 115. The rotary brush 72, 102 is configured to remove dust from the air filter 21. The brush cleaning member 85, 115 is configured to remove dust attaching to the rotary brush 72, 102. Further, the brush cleaning member 85, 115 is disposed between the compression rod 86, 116 and the rotary brush 72, 102.

An air conditioner according to a fourteenth aspect of the present invention is characterized as follows. The air filter 21 is disposed in a movable state. The rotary brush 72, 102 has an axis intersecting with a moving direction of the air filter 21. Further, the rotary brush 72, 102 is configured to make contact with and slide along a surface of the air filter 21 during movement of the air filter 21 for removing the dust from the air filter 21. The compression rod 86, 116 is disposed roughly parallel to the rotary brush 72, 102.

An air conditioner according to a fifteenth aspect of the present invention is characterized in that a surface of the compression rod 86, 116 is roughened.

An air conditioner according to a sixteenth aspect of the present invention is an air conditioner with an automatic filter cleaning function of removing dust from an air filter 21. The air conditioner is characterized as follows. The air conditioner includes a dust box 71 and a compression rod 91. The dust box 71 includes a dust intake 80 and a dust containing section 81 configured to contain dust put therein through the dust intake 80. The compression rod 91 is at least partially exposed to an interior of the dust containing section 81. The compression rod 91 is rotatably supported by the dust box 71. Further, the dust box 71 is configured to rotationally drive the compression rod 91 for putting dust into the dust containing section 81 and contain the dust within the dust containing section 81 in a compressed state.

An air conditioner according to a seventeenth aspect of the present invention is characterized in that a surface of the compression rod 91 is roughened.

An air conditioner according to an eighteenth aspect of the present invention is characterized in that the compression rod 91 includes a helical protrusion 93a formed thereon.

An air conditioner according to a nineteenth aspect of the present invention is characterized as follows. The air filter 21 is disposed in a movable state. The air conditioner further includes a rotary brush 72. The rotary brush 72 has an axis intersecting with a moving direction of the air filter 21. The rotary brush 72 is configured to make contact with and slide along a surface of the air filter 21 during movement of the air filter 21 for removing dust from the air filter 21. Further, the compression rod 91 is disposed roughly parallel to the rotary brush 72.

### <Advantageous Effects of Invention>

According to the air conditioner of the present invention, dust is configured to be contained within the dust containing section 81, 111 in a compressed state in conjunction with rotational driving of the dust transportation section 86, 116. A large volume of dust can be thereby contained within the dust containing section 81, 111. Accordingly, frequency of disposing dust can be reduced. In other words, time and effort of disposing dust can be saved. Further, scattering of dust is inhibited within the dust containing section 81, 111 by reducing a moving range (movement) of the dust transportation section 86, 116. Compression force can be thereby further increased compared to the well-known air conditioners. Yet further, dust within the dust box 71, 101 can be further smoothly compressed without allowing the dust to leak through the dust intake 80, 110, for instance, compared to a structure that a strip compression plate is configured to be reciprocated.

According to the air conditioner of the second aspect of the present invention, the dust, attaching to the dust transportation section 86, 116 after being put through the dust intake 80, 110, can be smoothly guided to the interior of the dust containing section 81, 111 through the clearance between the surface of the dust transportation section 86, 116 and the distal end of the guide wall 82, 112. Further, dust left attaching to the dust transportation section 86, 116 can be prevented from leaking through the dust intake 80.

According to the air conditioner of any of the third to fifth aspects of the present invention, dust can be reliably compressed while leakage of dust can be prevented. Simultaneously, a volume of dust containable in the air conditioner can be sufficiently ensured (i.e, increased) with a compact structure.

Especially, according to the air conditioner of the eighth aspect of the present invention, the rotational direction A of the rotary brush 102 and the rotational direction D of the compression rod 116 are configured to be opposite to each other. Compression force (i.e., pressing force) can be thereby further enhanced. According to the air conditioner of the tenth aspect of the present invention, the guide wall 112 is formed in a part of the ctenoid brush cleaning member 115, which is closer to a base end portion of the brush cleaning member 115. Distance can be thereby reduced between the brush cleaning member 115 and the compression rod 116. Accordingly, moving distance of dust can be reduced and compression of dust can be smoothly achieved.

Further, according to the air conditioner of the twelfth aspect of the present invention, the dust transportation section is composed of a pair of compression rods configured to rotate opposite to each other. Dust is herein configured to be put into the dust containing section in a compressed state while being compressed between the compression rods. In this case, a compression operation can be reliably executed and accordingly dust can be further efficiently compressed.

Further, when the surface of the compression rod 86, 116 is roughened, friction force is increased between the roughened surface and dust attaching thereto. Accordingly, dust can be further efficiently compressed.

When the air conditioner includes the brush cleaning member 85, 115, dust attaching to the rotary brush 72, 102 can be removed by the brush cleaning member 85, 115 and guided to the compression rod 86, 116. Therefore, cleaning efficiency of the rotary brush 72, 102 can be enhanced. Simultaneously, dust can be further efficiently compressed.

When the dust containing section 81 houses the compression rod 91 in the interior thereof, a large volume of dust can be contained in the dust containing section 81 because dust is configured to be contained in the dust containing section 8 in a compressed state in conjunction with rotational driving of the compression rod 91. Therefore, frequency of disposing dust can be reduced, and time and effort of disposing dust can be saved. Further, a moving range (movement) of the compression rod 91 is reduced for inhibiting dust from scattering within the dust containing section 81. Dust can be thereby further smoothly compressed within the dust box 71 without leaking through the dust intake 80, compared to a well-known structure that a strip compression plate is configured to be reciprocated or a well-known structure that a strip compression plate is configured to rotate about one of longitudinal ends thereof.

When the compression rod 91 include the helical protrusion 93a, dust making contact with the surface of the compression rod 91 can be consecutively transferred to either of the longitudinal ends of the compression rod 91 while being guided by the helical protrusion 93a. Therefore, dust can be further efficiently compressed.

### BRIEF DESCRIPTION OF THE DRAWINGS

FIG.1 is an exploded oblique view of the entire structure of an air conditioner according to a first exemplary embodiment of the present invention.
FIG.2 is a vertical cross-sectional view of the air conditioner.
FIG.3 is an oblique view of a frame unit of the air conditioner.
FIG.4 is an oblique view of an air filter attached to a pinion in the air conditioner.
FIG.5 is a vertical cross-sectional view of a transportation section of the air conditioner.
FIG.6 is a vertical cross-sectional view of the transportation section of the air conditioner under a condition that transportation processing is completed.
FIG 7 is a vertical cross-sectional view of a cleaning unit of the air conditioner.
FIG.8 is an oblique view of a rotary brush and a lid casing of the cleaning unit of the air conditioner.
FIG.9 is an exploded oblique view of the entire structure of an air conditioner according to a second exemplary embodiment of the present invention.
FIG.10 is a vertical cross-sectional view of a cleaning unit of the air conditioner of the second exemplary embodiment.
FIG.11 is an exploded oblique view of the cleaning unit of the air conditioner of the second exemplary embodiment.
FIG.12 is an oblique view of a compression rod used for the cleaning unit of the air conditioner of the second exemplary embodiment.
FIG.13 is a vertical cross-sectional view of another exemplary cleaning unit of the air conditioner of the present invention.
FIG.14 is a vertical cross-sectional view of a cleaning unit of the well-known air conditioners.

### BEST MODE FOR CARRYING OUT THE INVENTION

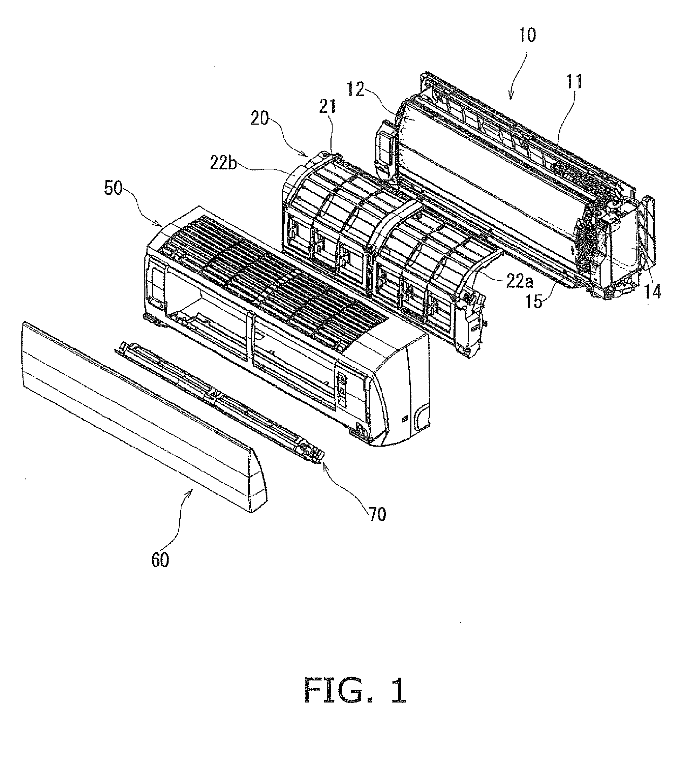

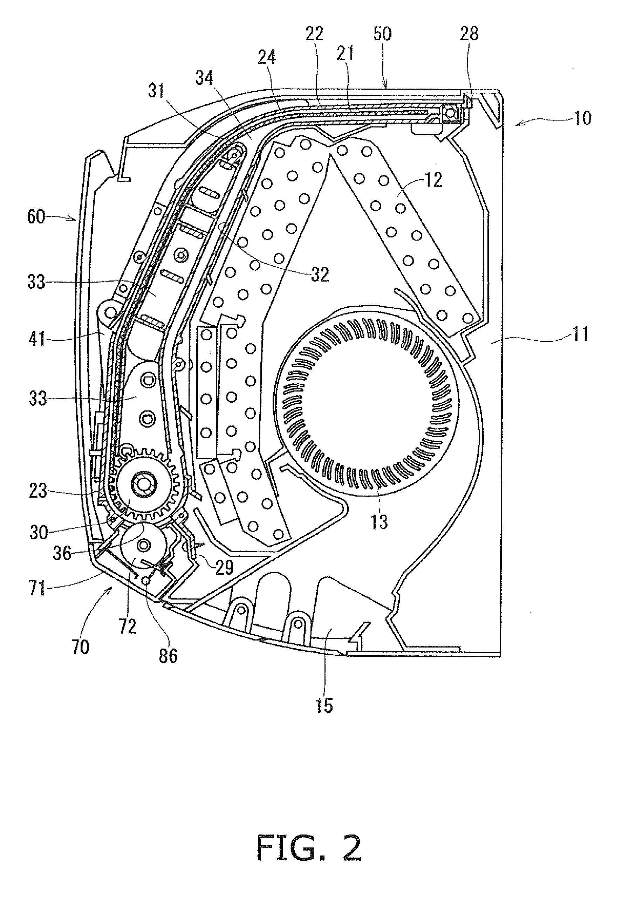

Now, an air conditioner according to a specific exemplary embodiment of the present invention will be hereinafter explained with reference to figures. FIG.1 is an exploded oblique view of the entirety of the air conditioner, whereas FIG.2 is a vertical cross-sectional view of the air conditioner. The air conditioner includes a main unit 10, a filter unit 20, an exterior casing 50, and a cleaning unit 70.

The main unit 10 includes a base frame 11. Various components are attached to the base frame 11, including e.g., an indoor heat exchanger 12, a ventilation fan (a cross-flow fan) 13, and an electric component box 14. The main unit 10 is configured to inhale indoor air and execute various air conditioning operations including e.g., a cooling operation, a heating operation, and a dehumidifying operation. The base frame 11 includes an air outlet 15 on the bottom surface thereof. The air outlet 15 is configured to blow the inhaled air back to the indoor after a predetermined conditioning is executed for the inhaled air.

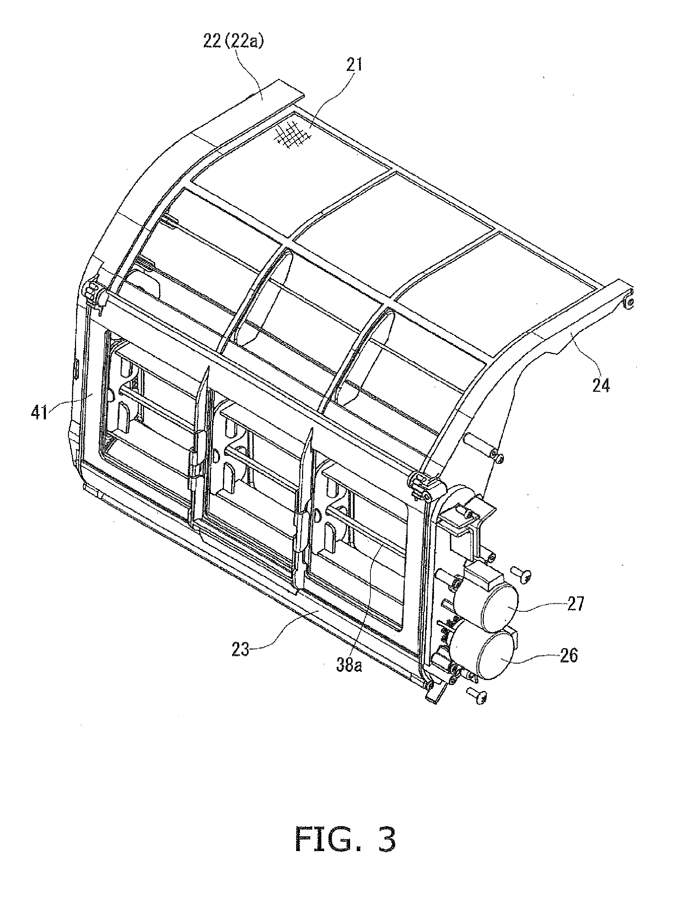

As illustrated in FIG.1, the filter unit 20 includes a pair of a right frame unit 22a and a left frame unit 22b. Each frame unit 22 supports an air filter 21 in a movable state (the reference numeral 22 will be hereinafter assigned to both of the frame units when distinction of right and left is not particularly made for them). FIG.3 illustrates a detailed view of the frame unit 22a, which is a front view of the right-side one of the frame units 22. The frame unit 22 includes a main body 23 and a pair of guide arms 24. The main body 23 forms a lower part of the frame unit 22. The guide arm 24 is extended from the main body 23 in an obliquely upward direction. Pinions 30 are attached to each of the main bodies 23 of the right and left frame units 22a, 22b. The pinions 30 function as a transportation section configured to transport the air filter 21 to be described. Further, a pair of a lower motor 26 and an upper motor 27 is attached to the right lateral side of the main body 23 of the right frame unit 22a. Each of the motors 26, 27 functions as a driving section configured to drive the pinions 30. The lower motor 26 is configured to drive the air filter 21 of the right frame unit 22a illustrated in FIG.3, whereas the upper motor 27 is configured to drive the air filter 21 of the left frame unit 22b illustrated in FIG.1. It should be noted that the upper motor 27 is configured to transmit a rotational output thereof to the left frame unit 22b through a transmission shaft 38a and drive the air filter 21 of the left frame unit 22b using a group of gears (not illustrated in the figure). It should be also noted that the front side of the main body 23 is structured as a door section 41 in each frame unit 22 as illustrated in FIG.3. The lower part of the door section 41 is configured to pivot about the upper part thereof in a back and forth direction.

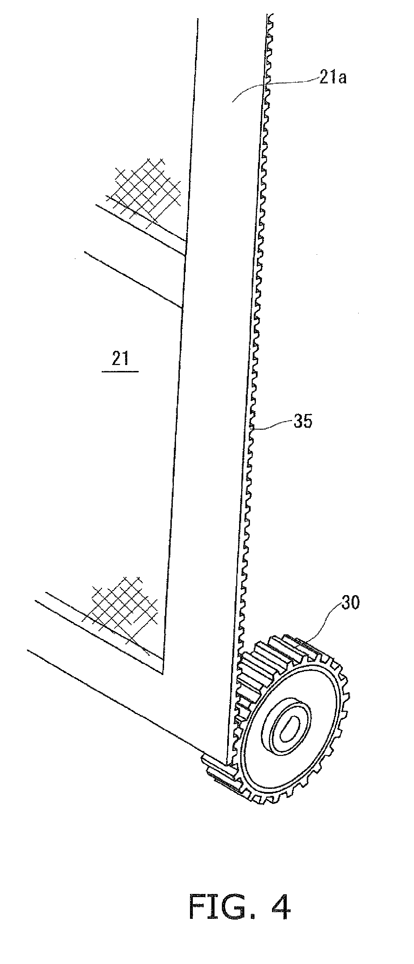

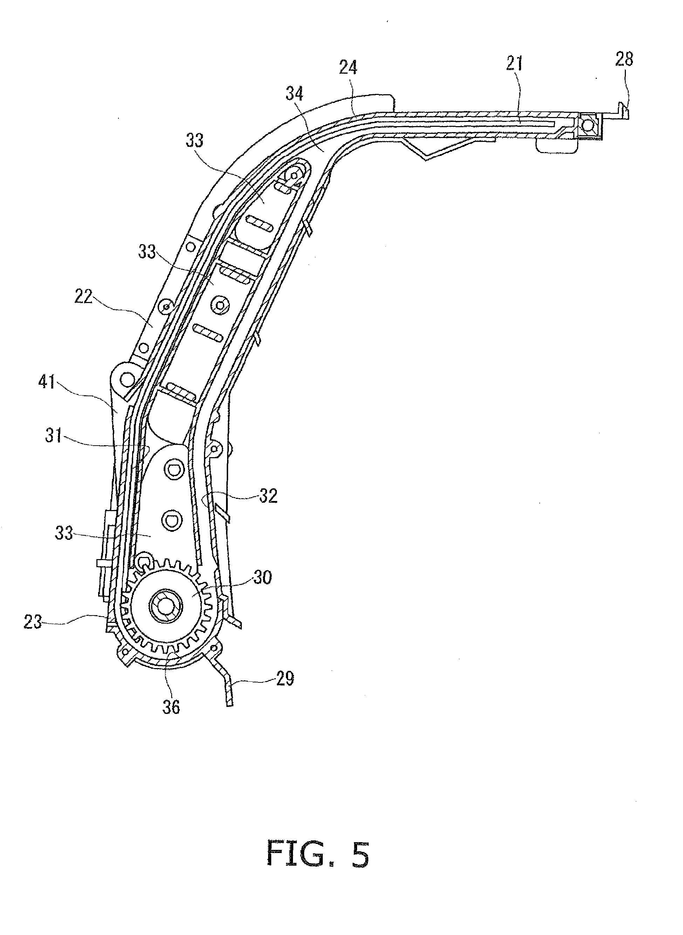

The air filters 21 are belt-shaped filters. As illustrated in FIG.4, each air filter 21 includes a pair of rack sections 35 on the back sides of the both lateral portions of a frame member 21a of the air filter 21. The rack sections 35 are configured to mesh with the pinions 30 on a one-to-one basis. FIGS.2 and 5 illustrate an initial position (i.e., a normal use position) of each air filter 21. Under the condition, the bottom end of the air filter 21 is disposed in the vicinity of the pinions 30. Further, both lateral sides of the air filter 21 are herein guided by a pair of a right normal guide section 31 and a left normal guide section 31. The normal guide sections 31 are formed on the insides of the respective guide arms 24 and the insides of the main body 23 in the frame unit 22. Further, the air filter 21 is configured to cover almost the entire windward part of the indoor heat exchanger 12, as similarly seen in the well-known air conditioners.

Next, the pair of the normal guide sections 31 and a pair of folded guide sections 32 will be explained. FIGS.2 and 5 illustrate vertical cross-sectional views of the lateral part of the frame unit 22. In FIGS.2 and 5, a left side corresponds to a windward side, whereas a right side corresponds to a leeward side. In each lateral outer wall of the frame unit 22, a section ranging from a lower part to a center part has a width greater than that of an upper part. Further, each lateral outer wall of the frame unit 22 includes a bottom end portion formed in a circular-arc shape. The bottom end portion houses the pinion 30 in the interior thereof. A partition member 33 is disposed above the pinion 30 while being separated from a corresponding lateral outer wall of the frame unit 22 at a predetermined interval. Further, each normal guide section 31 is formed forward of the pinion 30 while being interposed between the front outer wall of the frame unit 22 and the front surface of the partition member 33. On the other hand, each folded guide section 32 is formed rearward of the pinion 30 while being interposed between the rear outer wall of the frame unit 22 and the back surface of the partition member 33. The folded guide section 32 continues to the normal guide section 31 in a continuous section 34. The continuous section 34 is an intermediate part (i.e., an upper part) of the normal guide sections 31. Thus, the frame unit 22 includes a pair of the normal guide sections 31 and a pair of the folded guide sections 32. The pair of the normal guide sections 31 is herein configured to retain the air filter 21 in the normal use position. On the other hand, each folded guide section 32 continues to one of the end portions of each normal guide section 31. Simultaneously, each folded guide section 32 continues to the intermediate part of each normal guide section 31 while being folded through a curved section 36. Further, the curved section 36 houses the pinion 30 in the interior thereof. A rotary shaft of the pinion 30 is disposed in the horizontal direction. In other words, the rotary shaft of the pinion 30 is perpendicular to a moving direction of the air filter 21 while being extended parallel to an air filter plane. Two pinions structured above are disposed in each frame unit 22 as a pair of a right pinion 30 and a left pinion 30.

As described above, the filter unit 20 is formed by coupling the pair of the right frame unit 22a and the left frame unit 22b, each of which houses the air filter 21 and the pinions 30, and attaching the motors 26, 27 thereto as driving sections configured to drive the frame units 22a, 22b. The filter unit 20 is thereby configured to drive the respective pinions 30 by means of the motors 26, 27. As illustrated in FIG.2, the filter unit 20 is attached to the base frame 11. Each frame unit 22 includes a single or plurality of interlock pawl pieces 28 on the upper edge thereof. The interlock pawl piece/pieces 28 are interlocked with the upper end of the base frame 11. Further, each frame unit 22 includes a single or plurality of attachment pieces 29 protruded from the bottom part thereof. The attachment piece/pieces 29 is/are fixed to a part of the base frame 11 (specifically a part closer to the air outlet 15) by means of a screw/screws. As illustrated in FIG.2, the lower section of each frame unit 22 (corresponding to a section positioned below the pinion 30) is opened to the downward in a position of the lower part of the filter unit 20. A rotary brush 72 of the cleaning unit 70 described below is configured to clean the surface of the air filter 21 configured to move to the lower opened part.

The exterior casing 50 is detachably attached to the filter unit 20 while covering the outside of both the main unit 10 and the filter unit 20. The exterior casing 50 includes a front panel 60 on the front side thereof. The front panel 60 is configured to be opened and closed. Further, the pair of the right door section 41 and the left door section 41 of the filter unit 20 is disposed on the back side of the front panel 60. Attachment/detachment of the pair of the right air filter 21 and the left air filter 21 is configured to be executed through an opening/closing operation of the pair of the right door section 41 and the left door section 41. This is because the pair of the right door section 41 and the left door section 41 is configured to be exposed only by opening or removing the front panel 60 without removing the entire exterior casing 50.

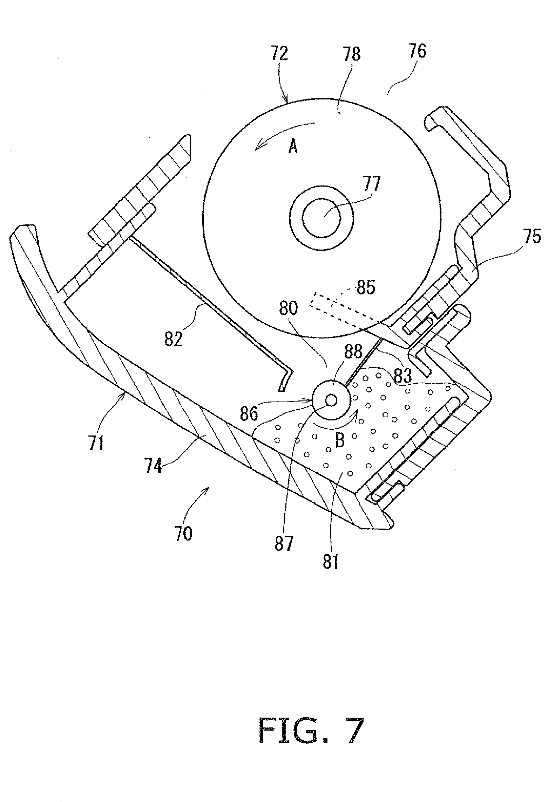

As illustrated in FIGS. 2 and 7, the cleaning unit 70 includes a dust box 71 and the rotary brush 72. The dust box 71 is detachably attached to the exterior casing 50. The dust box 71 is configured to contain dust removed from the air filter 21. The rotary brush 72 is configured to make contact with and slide along the surfaces of the air filters 21 for scraping away the dust attaching to the air filters 21.

As illustrated in FIG.7, the dust box 71 is formed in a transversely elongated box shape by the combination of a main casing 74 and a lid casing 75 attached to the main casing 74. Further, the dust box 71 is disposed below the filter unit 20 under a condition that an upper opened section 76 is opposed to a lower opened section of the filter unit 20.

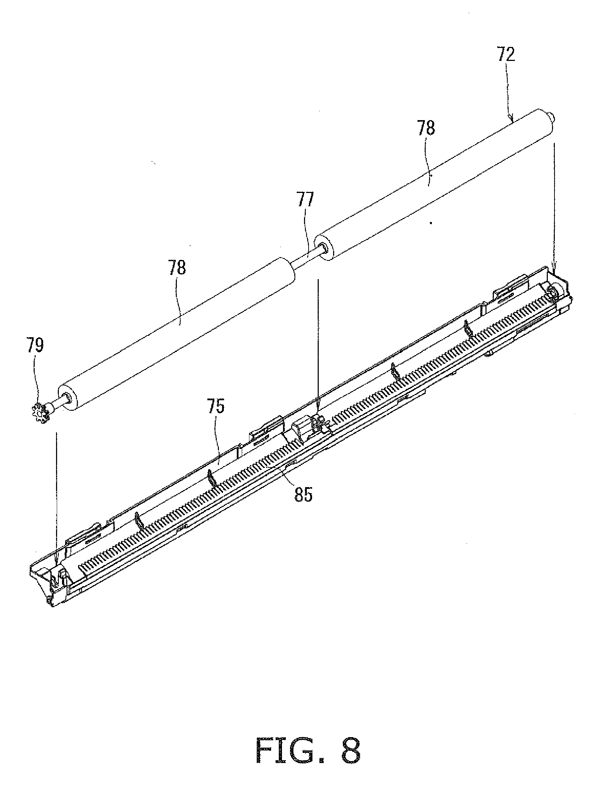

As illustrated in FIGS.7 and 8, the rotary brush 72 includes a rotary shaft 77 and a pair of brush fur sections 78. The rotary shaft 77 is rotatably supported by the lid casing 75 of the dust box 71. The brush fur sections 78 are embedded into the outer peripheral surface of the rotary shaft 77. Further, the rotary brush 72 is contained within the dust box 71 while being disposed along a longitudinal direction of the dust box 71. The brush fur sections 78 are herein partially exposed out of the upper opened section 76. The rotary brush 72 is disposed under a condition that the rotary shaft 77 (i.e., an axis) intersects with a moving direction of the air filters 21. It should be noted that a gear 79 is attached to one of the distal ends of the rotary shaft 77 of the rotary brush 72. The rotary brush 72 is configured to rotate about the rotary shaft 77 when the gear 79 is rotationally driven by a driving section such as a driving motor (not illustrated in the figure).

As illustrated in FIG.7, the dust box 71 includes a dust containing section 81. The dust containing section 81 is configured to contain dust put therein through a dust intake 80 positioned below the rotary brush 72. The dust intake 80 is segmented and formed between the front end (i.e., the distal end) of a plate-shaped guide wall 82 and the front end (i.e., the distal end) of a plate-shaped anti-reverse wall 83, while being disposed along the rotary brush 72. The guide wall 82 is herein protruded from the main casing 74, whereas the anti-reverse wall 83 is protruded from the lid casing 75.

As illustrated in FIG.7, the guide wall 82 is positioned below the rotary brush 72 while being disposed along the rotary brush 72. The guide wall 82 is slanted downwards from the base end thereof to the front end thereof (i.e., slanted downwards form front to rear). Further, the front end of the guide wall 82 is bent downward. On the other hand, the anti-reverse wall 83 is positioned below the rotary brush 72 while being disposed along the rotary brush 72, as illustrated in FIG.7. The anti-reverse wall 83 is slanted downwards from the base end thereof to the front end thereof (i.e., slanted downwards from rear to front). In other words, the guide wall 82 and the anti-reverse wall 83 are disposed in a roughly V-shape in a side view. A clearance is thereby produced between the bottom portion of the guide wall 82 and the bottom portion of the anti-reverse wall 83 (i.e., the front end of the guide wall 82 and the front end of the anti-reverse wall 83). The clearance herein functions as the dust intake 80. Further, the lower space of the main casing 74 is segmented by the guide wall 82 and the anti-reverse wall 83. The lower space herein functions as the dust containing section 81.

Further, the dust box 71 houses a brush cleaning member 85 and a compression rod 86. The brush cleaning member 85 is configured to scrape away and drop dust attaching to the rotary brush 72 towards the dust intake 80. The compression rod 86 allows the dust containing section 81 to contain dust put therein through the dust intake 80 in a compressed state.

As illustrated in FIGS. 7 and 8, the brush cleaning member 85 is attached to the lid casing 75. Further, the brush cleaning member 85 has a ctenoid front end. The front end of the brush cleaning member 85 is positioned below the rotary brush 72, while being disposed along a longitudinal direction of the rotary brush 72. The front end of the brush cleaning member 85 is slanted upwards from rear to front. The ctenoid front end is meshed with the brush fur sections 78 of the rotary brush 72. The brush cleaning member 85 is accordingly configured to scrape away and drop dust attaching to the brush fur sections 78 in conjunction with rotation of the rotary brush 72 (i.e., counterclockwise rotation depicted with Arrow A in FIG.7).

As illustrated in FIG.7, the compression rod 86 includes a rotary shaft 87 and a friction member 88. The rotary shaft 87 is rotatably supported by the main casing 74. The friction member 88 is attached to the outer peripheral surface of the rotary shaft 87. The surface of the friction member 88 is roughened. Further, the compression rod 86 is positioned below the brush cleaning member 85 while being roughly parallel to the rotary shaft 72. Further, the compression rod 86 is disposed in or in the vicinity of the dust intake 80. It should be noted that a gear (not illustrated in the figure) is attached to one of the distal ends of the rotary shaft 87 of the compression rod 86. The compression rod 86 is configured to rotate about the rotary shaft 87 (i.e., rotate in a counterclockwise direction depicted with Arrow B in FIG.7) when the gear is rotationally driven by a driving section such as a driving motor (not illustrated in the figure). In this case, a single driving section may be shared by the rotary brush 72 and the compression rod 86 for rotationally driving the rotary brush 72 and the compression rod 86 in conjunction with each other. It should be also noted that the aforementioned friction member 88 is used for forming the surface of the compression rod 86 in a roughened condition. Alternatively, the surface of the compression rod 86 can be formed in a roughed condition by forming a convexo-concave or a groove on the surface of the compression rod 86 made of a synthetic resin.

Further, the compression rod 86 is disposed between the front end of the guide wall 82 and the front end of the anti-reverse wall 83. Further, the guide wall 82 is disposed on a side positioned in a direction that the surface of the compression rod 86 approaches to the dust containing section 81. On the other hand, the anti-reverse wall 83 is disposed on a side positioned in a direction that the surface of the compression rod 86 separates away from the dust containing section 81. Further, the compression rod 86 is disposed under a condition that an interval between the surface of the compression rod 86 and the front end of the guide wall 82 is greater than an interval between the surface of the compression rod 86 to the front end of the anti-reverse wall 83. When dust is scraped away by the rotary brush 72 and attaches to the compression rod 86, the aforementioned structure is configured to smoothly guide the dust into the dust containing section 81 through the clearance produced between the surface of the compression rod 86 and the front end of the guide wall 82. Further, the structure is configured to prevent dust left attaching to the compression rod 86 from leaking through the dust intake 80. In addition, the surface of the compression rod 86 is roughened. Pressing force is thereby further increased in guiding dust into the dust containing section 81 through the clearance produced between the surface of the compression rod 86 and the front end of the guide wall 82. In other words, a dust containing operation can be reliably executed.

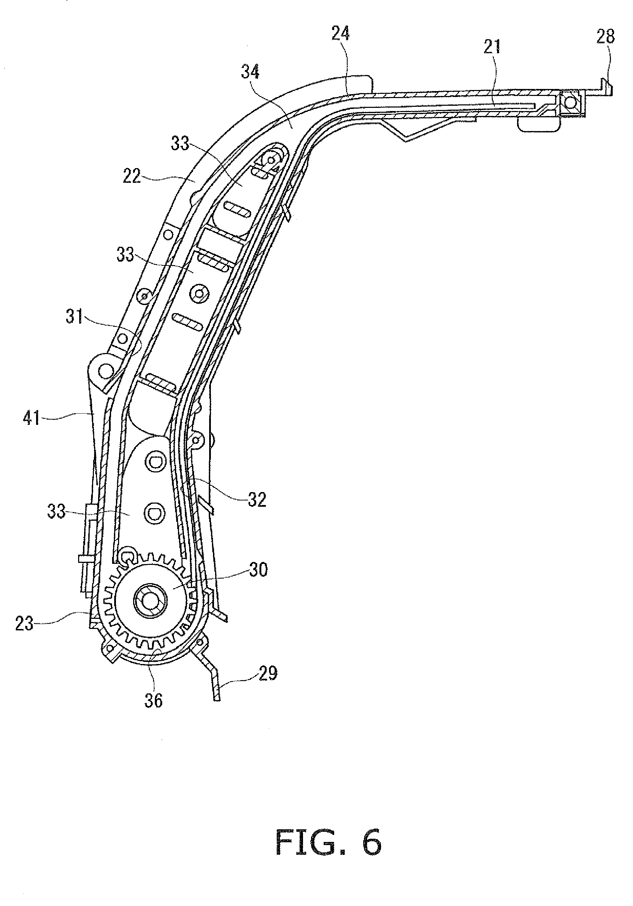

The aforementioned air conditioner is configured to execute an air conditioning operation under a condition that the air filters 21 are set to be in normal positions illustrated in FIGS.2 and 5. The air conditioner is then configured to execute an automatic cleaning operation for the air filters 21 when the air conditioning operation is deactivated or more specifically when the air conditioning operation is deactivated under a predetermined condition is satisfied (e.g., a predetermined period of time has been elapsed). The procedure of the automatic cleaning operation will be hereinafter explained with reference to FIGS.5 and 6. It should be noted in a state of FIG.5 (i.e., a normal operation state) that the lower end of the air filter 21 will be hereinafter referred to as "a front end" whereas the upper end of the air filter 21 will be hereinafter referred to as "a rear end" for the sake of convenience in explanation.

First, the respective motors 26, 27 are driven for rotating the pinions 30 from the state illustrated in FIG.5. Simultaneously, the rotary brush 72 and the compression rod 86 of the cleaning unit 70 are rotationally driven. Accordingly, the air filters 21 start moving because the rack sections 35 of the air filters 21 are meshed with the pinions 30. The front end of each air filter 21 moves down, and is then turned up while passing through the surroundings of the pinions 30. The front end of each air filter 21 thus moves up on the back surface side (i.e., a back side in an air flow direction). In this case, the rotary brush 72 is rotated in a direction opposite to the rotational direction of the pinion 30 (i.e., a counterclockwise direction illustrated in Arrow A in FIG.7). Accordingly, the rotary brush 72 scrapes way dust attaching to the air filters 21 of the moving states while sliding along the surface of the air filters 21. When reaching the continuous section 34 formed in the intermediate part of the normal guide sections 31, the front end of each air filter 21 is guided from the continuous section 34 to the upper end of the normal guide section, i.e., a section where the rear end of the air filter 21 is positioned in the initial state. Each air filter 21 is thus moved to the back surface side. It should be noted that the position of the continuous section 34 is set in relation to the length of each air filter 21. In other words, the front end of each air filter 21 is herein configured to be guided to the upper end of the normal guide section after the rear end of each air filter 21 passes through the continuous section 34. The cleaning unit 70 executes cleaning of the air filters 21 in the transportation processing. When the cleaning unit 70 completes cleaning of the component, rotation of the pinion 30 and rotational driving of the rotary brush 72 are deactivated. The outbound cleaning operation is thus completed with the aforementioned configuration. Next, the inbound cleaning operation will be executed. In this case, the pinions 30 are configured to be rotated in a direction opposite to the rotational direction in the outbound cleaning operation. The air filter 21 is thereby transported from the folded guide section 32 to the normal guide sections 31. The cleaning unit 70 executes cleaning of the air filter 21 in the transportation processing. It should be noted that in the outbound cleaning operation, the rotary brush 72 is configured to be rotationally driven faster than the transportation speed of the air filters 21 or rotational driving of the rotary brush 72 is configured to be suspended.

The rotary brush 72 thus scrapes away dust in the aforementioned cleaning operation, and the scraped dust partially drops on the top surface of the guide wall 82 of the dust box 71. The dust is then guided to the dust intake 80 along the slope of the guide wall 82. The dust is transported into the dust containing section 81 through the dust intake 80. On the other hand, dust left attaching to the rotary brush 72 without dropping from the rotary brush 72 is scraped by the brush cleaning member 85. The scraped dust is then transported into the dust containing section 81 through the dust intake 80.

The dust, dropping on the top surface of the guide wall 82, is herein mainly cloud-like dust having a large size and a low density. Therefore, the dust is compressed between the compression rod 86 and the front end of the guide wall 82, and the compressed dust is transported into the dust containing section 81. In this case, the compression rod 86 is rotated (i.e., in a counterclockwise direction depicted with Arrow B in FIG.7) within the dust containing section 81 of the dust box 71. Therefore, rotation of the friction member 88 consecutively transports dust, filled up to the vicinity of the dust intake 80 within the dust containing section 81, to the rearward (i.e., to the back side of the anti-reverse wall 83). The dust is finally press-contacted with the anti-reverse wall 83 by means of rotation of the friction member 88. The dust is thus contained within the dust containing section 81 in a compressed state. In this case, the compression rod 86 is only rotated about the rotary shaft 87 thereof. The moving range (i.e., movement) of the compression rod 86 is thereby reduced to a small extent. Therefore, scattering of dust can be inhibited within the dust containing sections 81. Further, the compression rod 86 can further smoothly compress dust within the dust box 71 without allowing dust from leaking through the dust intake 80, compared to a structure that a strip compression plate is configured to be reciprocated. Further, when the dust containing section 81 is filled with dust, the dust box 71 is removed from the exterior casing 50 for disposing the dust stored in the dust box 71. In this case, the dust containing section 81 can contain a large volume of dust by containing the dust therein in a compressed state. Therefore, frequency of disposing dust can be reduced. Accordingly, time and effort of disposing dust can be saved.

Overall, the aforementioned air conditioner is of a type having an automatic filter cleaning function and includes the dust box 71 configured to contain dust removed from the air filter 21. The air conditioner is characterized as follows. The dust box 71 herein includes the dust intake 80 and the dust containing section 81 configured to contain dust put therein through the dust intake 80. Further, the dust box 71 supports a dust transportation section (i.e., the compression rod 86) in or in the vicinity of the dust intake 80 while allowing the dust transportation section 86 to rotate. Further the dust box is configured to rotationally drive the dust transportation section (i.e., the compression rod 86) for containing dust within the dust containing section 81 in a compressed state.

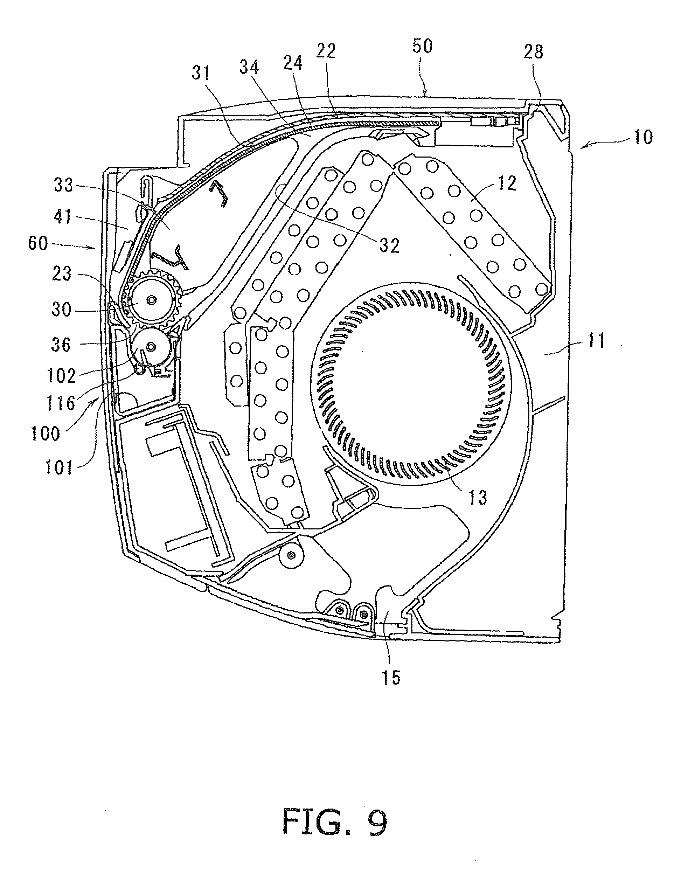

Next, an air conditioner according to a second exemplary embodiment of the present invention will be hereinafter explained. As illustrated in FIGS.9 to 12, the air conditioner of the second exemplary embodiment includes a cleaning unit 100 as a modified cleaning unit. As illustrated in FIG.9, a main unit 10, a filter unit 20, an exterior casing 50, and a front panel 60 are approximately the same as those in the first exemplary embodiment. Therefore, when a component of the second exemplary embodiment has a function identical to that of a component of the first exemplary embodiment, a reference numeral assigned to the member of the first exemplary embodiment is also assigned to the member of the first exemplary embodiment. Explanation of component will be hereinafter omitted for the sake of brevity. The cleaning unit 100 is detachably attached to the exterior casing 50. The cleaning unit 100 includes a dust box 101 and a rotary brush 102. The dust box 101 is configured to contain dust removed from air filters 21. The rotary brush 102 is configured to make contact with and slide along the surface of the air filters 21 for scraping away dust attaching to the air filters 21.

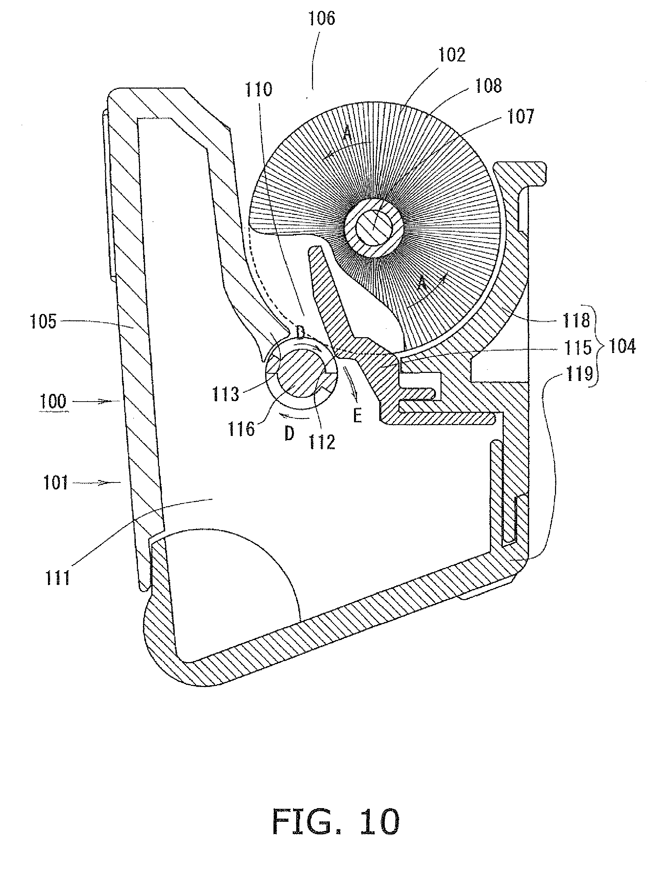

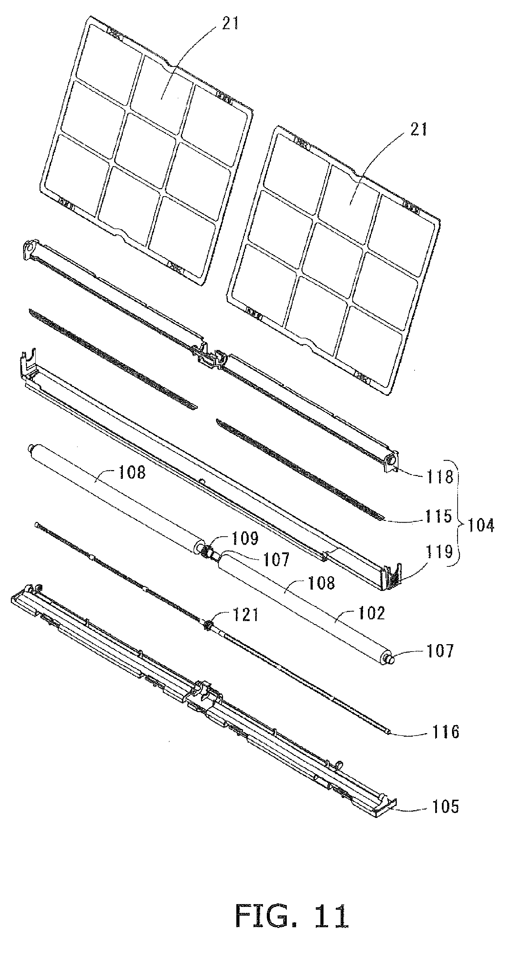

As illustrated in FIG.10, the dust box 101 is formed in a transversely elongated box shape by the combination of a main casing 104 and a lid casing 105 attached to the main casing 104. Further, the dust box 101 is disposed below the filter unit 20 under a condition that an upper opened section 106 thereof is opposed to a lower opened section of the filter unit 20. Unlike the exemplary embodiment illustrated in FIG.7, the lid casing 105 is herein disposed on the front side of the air conditioner, whereas the main casing 104 is disposed on the back side of the air conditioner. Further, the main casing 104 supports the axis of the rotary brush 102 as illustrated in FIG.11. On the other hand, the lid casing 105 supports the axis of a compression rod 116. As illustrated in FIGS.10 and 11, the main casing 104 is composed of an upper casing member 118, a lower casing member 119, and a brush cleaning member 115. The brush cleaning member 115 is attached to the upper casing member 118.

The rotary brush 102 includes a rotary shaft 107 and a pair of brush fur sections 108. The rotary shaft 107 is rotatably supported by the main casing 104 of the dust box 101. The brush fur sections 108 are embedded into the outer peripheral surface of the rotary shaft 107. Further, the rotary brush 102 is contained within the dust box 101 while being disposed along a longitudinal direction of the dust box 101. The brush fur sections 108 are herein partially exposed out of the upper opened section 106. The rotary brush 102 is disposed under a condition that the rotary shaft 107 (i.e., an axis) intersects (perpendicularly) with a moving direction of the air filters 21. It should be noted that a gear (not illustrated in the figure) is attached to one of the distal ends of the rotary shaft 107 of the rotary brush 102. The rotary brush 102 is configured to rotate about the rotary shaft 107 when the gear is rotationally driven by a driving section such as a driving motor (not illustrated in the figure). Further, a gear 109 is attached to an axial intermediate part of the rotary shaft 107, as illustrated in FIG.11. The gear 109 is configured to rotationally drive the compression rod 116, as described below.

As illustrated in FIG.10, the dust box 101 includes a dust containing section 111. The dust containing section 111 is positioned below the rotary brush 102. The dust containing section 111 is configured to contain dust put therein through a dust intake 110. The brush cleaning member 115 of the main casing 104 includes a guide wall 112 formed in a part thereof, which is closer to the base end thereof attached to the upper casing member 118. Further, the lid casing 105 includes an anti-reverse wall 113 formed thereon. Contrary to the exemplary embodiment illustrated in FIG.7, the anti-reverse wall 113 is herein disposed on the front side of the air conditioner, whereas the guide wall 112 is disposed on the back side of the air conditioner. Further, the dust intake 110 is segmented and formed between the guide wall 112 and the anti-reverse wall 113. Yet further, the compression rod 116 is disposed along the rotary brush 102 while being opposed to the guide wall 112 and the anti-reverse wall 113 within the dust intake 110. The anti-reverse wall 113 is disposed above the axis of the compression rod 116. In other words, the anti-reverse wall 113 is positioned higher than the compression rod 116.

The brush cleaning member 115 of the dust box 101 is configured to scrape away and drop dust attaching to the rotary brush 102 to the dust intake 110. Further, the compression rod 116 is configured to function as a dust transportation section. When dust is removed by the brush cleaning member 115 and drops through the dust intake 110, the dust transportation section is configured to put the dust into the dust containing section 111 in a compressed state.

As illustrated in FIGS.10 and 11, the brush cleaning member 115 is attached to the upper casing member 118 of the main casing 104. Further, the brush cleaning member 115 has a ctenoid front end. The front end is slanted upwards from rear to front. The front end is positioned below the rotary brush 102 while being disposed along a longitudinal direction of the rotary brush 102. The ctenoid front end is thereby meshed with the brush fur sections 108 of the rotary brush 102. The brush cleaning member 115 is accordingly configured to scrape away and drop dust attaching to the brush fur sections 108 in conjunction with rotation of the rotary brush 102 (i.e., counterclockwise rotation depicted with Arrow A in FIG.10).

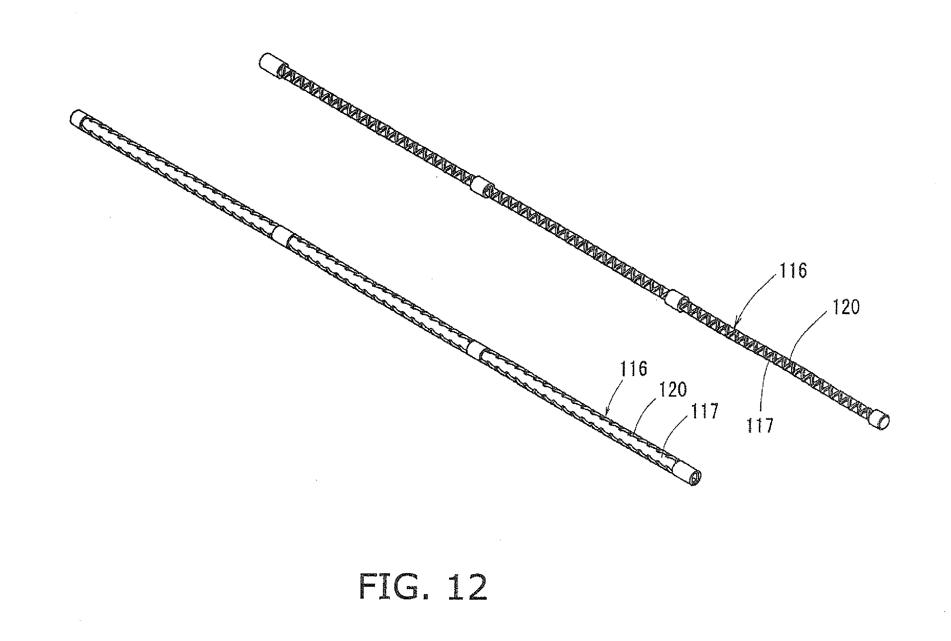

As illustrated in FIG.12, the compression rod 116 includes a rotary shaft 117 rotatably supported by the lid casing 105. The rotary shaft 117 includes a wavy protrusion 120 on the outer peripheral surface thereof. The protrusion 120 is formed on radial opposed parts of the outer peripheral surface of the rotary shaft 117. Each of the radial opposed parts has an area roughly one-fourth of the entire area of the outer peripheral surface of the rotary shaft 117. On the other hand, no change is made for the rest of the outer peripheral surface of the rotary shaft 117, i.e., the remaining radial opposed parts having an area roughly one-fourth of the entire area of the outer peripheral surface of the rotary shaft 117. In short, the wavy protrusion 120 is formed on the top and bottom parts of the outer peripheral surface of the rotary shaft 117, whereas no change is made for the right and left parts of the outer peripheral surface of the rotary shaft 117. As illustrated in FIG.11, the protrusion 120 is axially segmented into halves at the axial center of the rotary shaft 117. One of the axial halves of the protrusion 120 is phase-displaced at an angle of 90 degrees with respect to the other of the axial halves of the protrusion 120. The protrusion 120 is thereby configured to disperse the maximum torque to be produced in moving and compressing dust. This achieves reduction in driving force to be required. The compression rod 116 is positioned below the brush cleaning member 115 while being disposed roughly parallel to the rotary brush 102. The compression rod 116 is also disposed in the dust intake 110. Further, a gear 121 is attached to the axial center part of the rotary shaft 117 of the compression rod 116. The gear 121 is meshed with the gear 109 of the rotary brush 102. The compression rod 116 is configured to rotate about the rotary shaft 117 (in a clockwise direction depicted with Arrow D in FIG. 10) when the rotary brush 102 is rotationally driven by means of a driving section such as a driving motor (not illustrated in the figure). In this case, the compression rod 116 is configured to be rotationally driven in a direction opposite to rotational direction of the rotary brush 102.

A remarkable difference between the first and second exemplary embodiments is that the rotary brush 102 and the compression rod 116 are configured to rotate opposite to each other in the second exemplary embodiment. Because of the configuration, the air conditioner of the second exemplary embodiment has the structure that the anti-reverse wall 113 is disposed on the front side of the air conditioner whereas the guide wall 112 is disposed on the back side of the air conditioner. It should be noted that the air conditioner of the second exemplary embodiment also has the structure that an interval between the surface of the compression rod 116 and the front end of the guide wall 112 is set to be greater than an interval between the surface of the compression rod 116 and the front end of the anti-reverse wall 113. When an automatic cleaning operation is executed for the air filters 21 in the air conditioner according to the second exemplary embodiment, dust existing between the compression rod 116 and the rotary brush 102 is transported towards the dust intake 110 in conjunction with rotation of the compression rod 116 and the rotary brush 102. The dust is then scraped by the protrusion 120 of the compression rod 116. The dust is thereby transported into the dust containing section 111 from the dust intake 110, as indicated with Arrow E in FIG. 10. Thus, dust is scraped by the compression rod 116 along a direction that dust is transported by the rotary brush 102 (i.e., in a direction identical to the dust transportation direction). Therefore, dust can be smoothly removed.

Especially, dust removed from the rotary brush 102 is compressed while moving in the direction of gravitational force. Therefore, dust can be discharged in a natural flow. Further, transportation of dust and compression of dust are executed by a single component (i.e., the compression rod 116). Therefore, dust can be compressed in a limited space with a simple structure. In addition, the compression rod 116 includes the wavy protrusion 120. Therefore, compression force (i.e., pressing force) can be enhanced. Further, the rotational direction A of the rotary brush 102 and the rotational direction D of the compression rod 116 are configured to be opposite to each other. Therefore, the compression force (pressing force) can be further enhanced. Yet further, distance between the rotary brush 102 and the guide wall 112 (and distance between the rotary brush 102 and the compression rod 116) can be shorter than that in the aforementioned first exemplary embodiment. Accordingly, scattering and swirling of dust (cloud-like dust) can be prevented. Further, the guide wall 112 is formed on a part of the ctenoid brush cleaning member 115, which is closer to the base end of the brush cleaning member 115. Distance can be thereby reduced between the brush cleaning member 115 and the compression rod 116. In other words, moving distance of dust is reduced. Therefore, dust can be smoothly compressed.

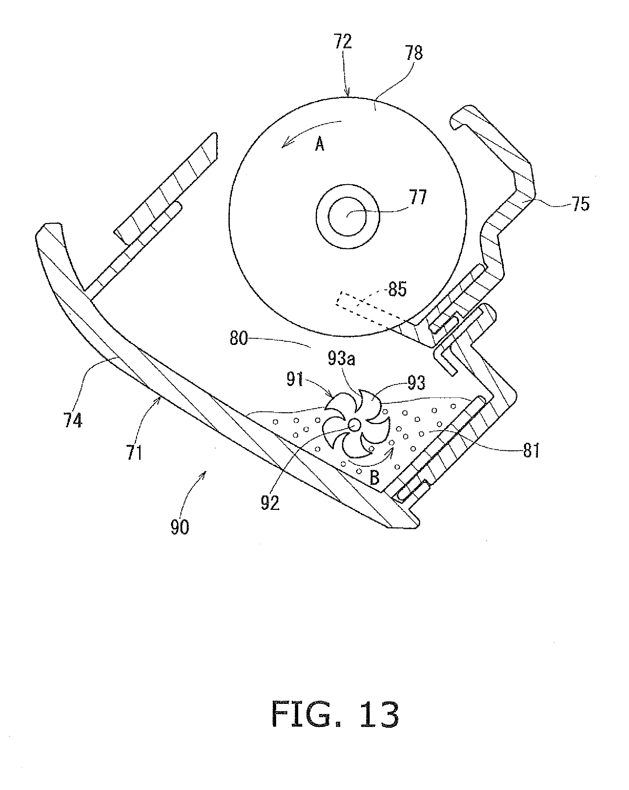

FIG.13 illustrates a cleaning unit 90 of an air conditioner according to another exemplary embodiment. The cleaning unit 90 does not include the aforementioned guide wall 82 and the aforementioned anti-reverse wall 83. In the cleaning unit 90, a compression rod 91 is disposed within a dust containing section 81 of a dust box 71 and entirety of the upper opened part of a dust containing section 81 is configured to function as a dust intake 80.

The compression rod 91 includes a rotary shaft 92 and a friction member 93. The rotary shaft 92 is rotatably supported by a main casing 74. The friction member 93 is attached to the outer peripheral surface of the rotary shaft 92. The surface of the friction member 93 is roughened. Further, the compression rod 91 is positioned below a brush cleaning member 85 while being disposed roughly parallel to a rotary brush 72. It should be noted that a gear (not illustrated in the figure) is attached to one of the distal ends of the rotary shaft 92 of the compression rod 91. The compression rod 91 is configured to rotate about the rotary shaft 92 (i.e., rotate in a counterclockwise direction depicted with Arrow B in FIG.9) when the gear is rotationally driven by a driving section such as a driving motor (not illustrated in the figure).

The friction member 93 of the compression rod 91 includes a helical protrusion 93a almost entirely longitudinally formed on the outer peripheral surface thereof. The compression rod 91 is configured to consecutively transport dust making contact with the friction member 93 to either of the longitudinal ends thereof while guiding the dust by the helical protrusion 93a in order to contain dust within the dust containing section 81 in a compressed state. In this case, the compression rod 91 is also configured to only rotate about the rotary shaft 92 thereof The moving range (i.e., movement) of the compression rod 91 is thereby reduced to a small extent. Scattering of dust can be accordingly inhibited within the dust containing section 81. Further, dust can be smoothly compressed without leaking out of the dust box 71. It should be noted that the other structures in the present exemplary embodiment are identical to those in the exemplary embodiment illustrated in FIG.7. Therefore, when a member illustrated in FIG. 13 has a function identical to that of a member of the aforementioned exemplary embodiment illustrated in FIG.7, a reference numeral assigned to the member in FIG.7 is also assigned to the member in FIG. 13.

Overall, the air conditioner, including the cleaning unit 90, is of a type having an automatic filter cleaning function and includes the dust box 71 configured to contain dust removed from the air filter 21. The air conditioner is characterized as follows. The dust box 71 includes the dust intake 80 and the dust containing section 81 configured to contain the dust put therein through the dust intake 80. Further, the dust box 71 rotatably supports the compression rod 91 while allowing the compression rod 91 to rotate under a condition that the compression rod 91 is at least partially exposed to the interior of the dust containing section 81. Yet further, the dust box 71 is configured to rotationally drive the compression rod 91 for containing dust within the dust containing section 81 in a compressed state.

The exemplary embodiments of the present invention have been specifically explained above. However, the present invention is not limited to the aforementioned exemplary embodiments. A variety of changes can be made for the aforementioned exemplary embodiments without departing from the scope of the present invention.

For example, the aforementioned dust transportation section may be composed of a pair of compression rods disposed in (or in the vicinity of) a dust intake. The pair of compression rods is herein configured to rotate opposite to each other. In other words, when dust is removed by a rotary brush and drops on the pair of compression rods, the pair of compression rods is configured to compress the dust and put the dust into a dust containing section in a compressed state. Further, in the aforementioned exemplary embodiment illustrated in FIG.13, the compression rod 91 is entirely disposed within the dust containing section 81. However, the present invention may adopt an arrangement that only a part of the compression rod 91 is exposed to the interior of the dust containing section 81. Further, the present invention is not limited to the air conditioners of a type configured to inhale indoor air and execute a cooling operation, a heating operation, and a dehumidifying operation. For example, the present invention can be applied to the air conditioners having only an air cleaning function of trapping dust contained in the indoor air. Further, the moving section configured to move air filters is not limited to be of the aforementioned loop type, and may be of a winding type.

### EXPLANATION OF THE REFERENCE NUMERALS

- 21: Air filter
- 71, 101: Dust box
- 72, 102: Rotary brush
- 80, 110: Dust intake
- 81, 111: Dust containing section
- 82, 112: Guide wall
- 83, 13: Anti-reverse wall
- 85, 15: Brush cleaning member
- 86, 91, 106: Compression rod
- 93a: Helical protrusion
<Patent Document 1>
Japan Laid-open Patent Application Publication No. JP-A-2004-347246

## Claims

1. An air conditioner with an automatic filter cleaning function of removing dust from an air filter (21), comprising:
a dust box (71) (101) including a dust intake (80) (110) and a dust containing section (81) (111) configured to contain dust put therein through the dust intake (80) (110); and
a dust transportation section (86) (116) disposed in or in the vicinity of the dust intake (80) (110), the dust transportation section (86) (116) rotatably supported by the dust box (71) (101),
wherein the dust box (71) (101) is configured to rotationally drive the dust transportation section (86) (116) for containing dust within the dust containing section (81) (111) in a compressed state.

2. The air conditioner according to claim 1,
wherein the dust box (71) (101) includes a guide wall (82) (112) and an anti-reverse wall (83) (113),
the dust intake (80) (110) is segmented and formed between a distal end of the guide wall (82) (112) and a distal end of the anti-reverse wall (83) (113), and
the dust transportation section (86) (116) is disposed between the guide wall (82) (112) and the anti-reverse wall (83) (113), the dust transportation section (86) (116) being configured to transport dust into the dust containing section (81) (111) through a clearance produced between the dust transportation section (86) (116) and the guide wall (82) (112).

3. The air conditioner according to claim 2,
wherein dust is press-contacted with the anti-reverse wall (83) (113) after the dust is transported into the dust containing section (81) (111).

4. The air conditioner according to one of claims 2 and 3, wherein an interval between the dust transportation section (86) (116) and the distal end of the guide wall (82) (112) is set to be greater than an interval between the dust transportation section (86) (116) and the distal end of the anti-reverse wall (83) (113).

5. The air conditioner according to one of claims 2 to 4, wherein the anti-reverse wall (83) (113) is disposed higher than or at the same height as the dust transportation section (86) (116).

6. The air conditioner according to one of claims 1 to 5, further comprising:
a rotary brush (72) (102) configured to remove dust from the air filter (21),
wherein the dust transportation section (86) (116) is composed of a compression rod (86) (116) disposed below the rotary brush (72) (102), the compression rod (86) (116) being configured to rotate about an axis arranged roughly parallel to the rotary brush (72) (102).

7. The air conditioner according to claim 6,
wherein the compression rod (86) is configured to rotate in a rotational direction identical to a rotational direction of the rotary brush (72),
the guide wall (82) is disposed on an upstream side in the rotational direction of the rotary brush (72), and
the anti-reverse wall (83) is disposed on a downstream side of the guide wall (82) in the rotational direction of the rotary brush (72).

8. The air conditioner according to claim 6,
wherein the compression rod (116) is configured to rotate in a direction opposite to the rotational direction of the rotary brush (102),
the guide wall (112) is disposed on a downstream side in the rotational direction of the rotary brush (102), and
the anti-reverse wall (113) is disposed on an upstream side of the guide wall (112) in the rotational direction of the rotary brush (102).

9. The air conditioner according to one of claims 6 to 8, further comprising:
a brush cleaning member (85) (115) configured to remove dust attaching to the rotary brush (72) (102) from the rotary brush (72) (102),
wherein the brush cleaning member (85) (115) is disposed between the rotary brush (72) (102) and the compression rod (86) (116).

10. The air conditioner according to claim 9, wherein the guide wall (112) is formed in the vicinity of a base end portion of the brush cleaning member (115).

11. The air conditioner according to one of claims 6 to 10,
wherein the air filter (21) is disposed in a movable state,
the rotary brush (72) (102) is disposed under a condition that the axis of the rotary brush (72) (102) intersects with a moving direction of the air filter (21), the rotary brush (72) (102) being configured to make contact with and slide along a surface of the air filter (21) during movement of the air filter (21) for removing dust from the air filter (21), and
the compression rod (86) (116) is disposed roughly parallel to the rotary brush (72) (102).

12. The air conditioner according to claim 1,
wherein the dust transportation section is disposed in or in the vicinity of the dust intake (80) (110), the dust transportation section including a pair of compression rods configured to rotate opposite to each other, and
the dust box (71) (101) is configured to rotationally drive the compression rods for putting dust into the dust containing section (81) (111) through a clearance produced between the compression rods and contain the dust within the dust containing section (81) (111) in a compressed state.

13. The air conditioner according to claim 12, further comprising:
a rotary brush (72) (102) configured to remove dust from the air filter (21); and
a brush cleaning member (85) (115) configured to remove dust attaching to the rotary brush (72) (102),
wherein the brush cleaning member (85) (115) is disposed between the compression rod (86) (116) and the rotary brush (72) (102).

14. The air conditioner according to claim 13,
wherein the air filter (21) is disposed in a movable state,
the rotary brush (72) (102) has an axis intersecting with a moving direction of the air filter (21), the rotary brush (72) (102) being configured to make contact with and slide along a surface of the air filter (21) during movement of the air filter (21) for removing dust from the air filter (21), and
the compression rod (86) (116) is disposed roughly parallel to the rotary brush (72) (102).

15. The air conditioner according to one of claims 6 to 14, wherein a surface of the compression rod (86) (116) is roughened.

16. An air conditioner with an automatic filter cleaning function of removing dust from an air filter (21), comprising:
a dust box (71) including a dust intake (80) and a dust containing section (81) configured to contain dust put therein through the dust intake (80); and
a compression rod (91) at least partially exposed to an interior of the dust containing section (81), the compression rod (11) rotatably supported by the dust box (71),
wherein the dust box (71) is configured to rotationally drive the compression rod (91) for putting dust into the dust containing section (81) and contain the dust within the dust containing section (81) in a compressed state.

17. The air conditioner according to claim 16, wherein a surface of the compression rod (91) is roughened.

18. The air conditioner according to claim 17, wherein the compression rod (91) includes a helical protrusion (93a) formed thereon.

19. The air conditioner according to one of claims 16 to 18,
wherein the air filter (21) is disposed in a movable state,
the air conditioner further includes a rotary brush (72), the rotary brush (72) having an axis intersecting with a moving direction of the air filter (21), the rotary brush (72) being configured to make contact with and slide along a surface of the air filter (21) during movement of the air filter (21) for removing dust from the air filter (21), and
the compression rod (91) is disposed roughly parallel to the rotary brush (72).
